# FASCICULE DE BREVET EUROPEEN

(11) **EP 1 674 166 B1**
(45) Date de publication et mention de la délivrance du brevet: **05.03.2014**
(21) Numéro de dépôt: 05112662.1
(22) Date de dépôt: 21.12.2005
(51) Int. Cl.: B06B 1/04

(54) **Dispositif vibrant muni de moyens de protection contre des chocs mécaniques pour un objet portable**
Rüttelvorrichtung für einen tragbaren Gegenstand mit Schutzmitteln gegen mechanische Stöße
Vibrating device having means for protection against mechanical shocks for a portable device

(30) Priorité: 22.12.2004 EP 04106904
(43) Date de publication de la demande: 28.06.2006
(73) Titulaire: ETA SA Manufacture Horlogère Suisse, 2540 Grenchen (CH)
(72) Inventeur: Matthey, Gérald Maurice, 1338, Ballaigues (CH)
(74) Mandataire: Vigand, Philippe

(56) Documents cités:
- EP-A- 0 625 738
- DE-A1- 4 117 227
- US-B1- 6 492 899
- WAKIWAKA H ET AL: "Development of high-performance millimeter-size vibrator for cellular phones" JOURNAL OF MAGNETISM AND MAGNETIC MATERIALS, ELSEVIER, AMSTERDAM, NL, vol. 242-245, avril 2002 (2002-04), pages 1195-1197, XP004360865 ISSN: 0304-8853

## Description

La présente invention concerne un dispositif vibrant, qui comprend des moyens de protection contre des chocs mécaniques, pour un objet portable, tel qu'une montre-bracelet. Le dispositif vibrant comprend une masse mobile constituée en partie d'une structure magnétique reliée à une structure fixe par l'intermédiaire d'un élément ressort et une bobine reliée à la structure fixe sans contact mécanique avec la masse mobile. La bobine est couplée électro-magnétiquement à la masse mobile pour permettre de la faire osciller dans au moins une direction d'oscillation lorsqu'elle est alimentée par des signaux électriques alternatifs à fréquence déterminée.

Le dispositif vibrant pour un objet portable peut être utilisé pour la génération d'une alarme silencieuse ou pour signaler un appel téléphonique par vibration. Pour ce faire, la bobine doit être électriquement activée pour actionner la masse mobile afin de créer une vibration à basse fréquence qui peut être ressentie par le porteur d'un tel objet. La vibration peut être commandée en fonction d'une programmation spécifique de l'objet portable de manière à avertir son porteur d'un événement spécifique, par exemple une heure de réveil, un appel téléphonique ou autre.

Le dispositif vibrant peut équiper un objet portable, tel qu'une montre-bracelet, un téléphone mobile, un organiseur traditionnel, un dispositif de recherche de personnes ou un autre objet de petite taille. Comme le dispositif vibrant comprend une masse mobile relativement importante par rapport à la masse totale du dispositif, il est nécessaire de le protéger de tout choc mécanique. De ce fait, il faut éviter que la masse mobile du dispositif vibrant subisse des mouvements dus aux chocs, par rapport à la structure fixe, d'une amplitude trop importante dans toutes les directions. Avec de tels chocs mécaniques, l'élément ressort, maintenant la masse mobile par rapport à la bobine reliée à la structure fixe, peut subir un flambage ou une fatigue importante susceptible d'endommager rapidement le dispositif vibrant, ou se briser.

Un exemple d'un dispositif vibrant de petite taille est décrit dans le document EP 0 625 738. Dans ce document, le dispositif vibrant est constitué d'une bobine cylindrique montée sur un corps d'une structure ferromagnétique, d'une masse mobile qui comprend un aimant permanent polarisé dans une direction parallèle à l'axe de la bobine, et d'éléments élastiques reliant la masse mobile à la structure ferromagnétique. La structure ferromagnétique comprend des portions d'excitation électromagnétique dirigées perpendiculairement par rapport à l'axe de la bobine, ces portions d'excitation étant en regard de parties polaires de la masse mobile. Lorsque la bobine est alimentée par des signaux électriques alternatifs, la masse avec l'aimant permanent décrit un mouvement oscillant quasi-linéaire.

Un inconvénient d'un tel dispositif décrit dans le document EP 0 625 738 est qu'il est sensible aux chocs, car la masse mobile doit être importante pour que le dispositif vibrant équipant par exemple une montre-bracelet procure une vibration susceptible d'être ressentie par le porteur de la montre. De ce fait, les éléments élastiques sont susceptibles de subir des déformations importantes ou de se rompre lors de chocs mécaniques importants.

Dans le document US 6,492,899, il est décrit un convertisseur électromagnétique qui comprend des moyens de protection contre des chocs mécaniques. Les moyens de protection sont constitués d'au moins un membre en matériau souple disposé soit sur un élément ressort fixé à une structure fixe et relié à une masse mobile, soit sur une bobine et un couvercle de protection de la structure fixe. Le membre de protection permet d'amortir tout choc mécanique afin de préserver l'élément ressort. Cependant, ce membre de protection constitue un élément supplémentaire aux éléments nécessaires à la fonctionnalité du convertisseur.

L'invention a donc pour but principal de pallier les inconvénients cités ci-dessus en réalisant un dispositif vibrant susceptible de comprendre des moyens de protection contre les chocs mécaniques, qui sont faciles à réaliser.

A cet effet, l'invention concerne un dispositif vibrant qui comprend les caractéristiques définies dans la revendication indépendante 1.

Un avantage du dispositif vibrant selon l'invention réside dans le fait qu'il comprend des moyens de protection permettant de limiter l'amplitude du mouvement de la masse mobile notamment dans des directions autres que la direction propre d'oscillation de la masse mobile lors d'un fonctionnement normal du dispositif vibrant. De plus, les moyens de protection limitent également l'amplitude de mouvement de ia masse mobile dans la direction d'oscillation à une valeur d'amplitude de préférence légèrement supérieure à la valeur d'amplitude maximale d'oscillation de la masse mobile en fonctionnement normal. Comme l'amplitude de mouvement de ladite masse mobile est limitée, cela préserve l'élément ressort du dispositif vibrant de toute contrainte mécanique (torsion, flexion) due à un choc mécanique.

L'élément ressort est composé de préférence d'une lame de base fixée sur la structure fixe et de deux lames ressorts venant de matière avec la lame de base. Les deux lames ressorts sont disposées sensiblement perpendiculaires à la lame de base sur deux côtés opposés de ladite lame de base. La masse mobile est maintenue entre les deux lames ressorts et est fixée sur une lame d'extrémité qui relie les extrémités des lames ressorts opposées à la lame de base.

L'élément ressort comprend encore une pièce venant de matière avec la lame de base qui est disposée sur un côté de la lame de base parallèle à la direction d'oscillation de la masse mobile. Cette pièce plate est disposée perpendiculaire à la lame de base et comprend une ouverture longitudinale dans la direction d'oscillation en combinaison avec une surface de la structure fixe sur laquelle est fixée la lame de base. Un élément en saillie de la masse mobile est disposé en partie à travers l'ouverture longitudinale afin que l'ouverture longitudinale de la pièce plate définisse des moyens de protection ou de guidage de l'élément en saillie de la masse mobile.

Les bords de l'ouverture remplissent le rôle de butées pour l'élément en saillie afin de limiter le mouvement de la masse mobile jusqu'à une amplitude de mouvement déterminée ce qui constitue un avantage du dispositif vibrant. La largeur de l'ouverture est choisie de dimension supérieure à l'épaisseur de la partie de l'élément en saillie traversant l'ouverture, mais de préférence de dimension inférieure au double de l'épaisseur de la partie dudit élément en saillie afin d'assurer une protection du dispositif vibrant. La longueur de l'ouverture est par contre choisie de manière à laisser la masse mobile osciller librement jusqu'à une amplitude maximale déterminée en fonctionnement normal du dispositif vibrant.

Un avantage du fait que les moyens de guidage soient définis par la pièce plate qui fait partie intégrante de l'élément ressort est qu'il n'est ainsi pas nécessaire de monter des éléments supplémentaires au dispositif pour assurer sa protection. Plusieurs éléments ressorts avec leurs lames et leur pièce peuvent être facilement réalisés par des opérations d'emboutissage et de pliage d'une tôle métallique. Le dispositif vibrant est ainsi constitué de composants faciles à réaliser et à monter tout en assurant la protection contre les chocs mécaniques de la masse mobile.

De préférence, la masse mobile comprend un second élément en saillie disposé sur un côté de la masse opposé au premier élément en saillie. Ce second élément en saillie est destiné à être positionné dans un logement de guidage de dimension adaptée d'une paroi d'une plate-forme intérieure d'un objet portable quand le dispositif vibrant est fixé sur la plate-forme. Par cet agencement des éléments en saillie coopérant avec des moyens de guidage du dispositif vibrant et de l'objet portable, une meilleure protection contre les chocs mécaniques est assurée dans toutes les directions.

L'invention concerne également un objet portable, tel qu'une montre-bracelet comprenant un dispositif vibrant cité ci-devant, le dispositif vibrant étant fixé sur une plate-forme de l'objet portable, qui se caractérise en ce que la plate-forme comprend une paroi avec un logement de guidage dans lequel est positionné un élément en saillie de la masse mobile du dispositif vibrant, qui est disposé sur un côté de la masse mobile opposé à la structure fixe, le logement de guidage étant de dimension adaptée de manière à permettre à la masse mobile d'osciller librement dans un mode de fonctionnement normal du dispositif vibrant au moins jusqu'à une valeur d'amplitude maximale déterminée, et pour limiter l'amplitude de mouvement de la masse mobile de manière déterminée dans toutes les directions afin de protéger le dispositif vibrant de chocs mécaniques.

Les buts, avantages et caractéristiques du dispositif vibrant pour un objet portable apparaîtront mieux dans la description suivante d'au moins un mode de réalisation de l'invention en liaison avec les dessins dans lesquels :
- la figure 1 représente une vue tridimensionnelle d'un dispositif vibrant muni de moyens de protection contre des chocs mécaniques selon l'invention,
- la figure 2 représente une vue de dessus du dispositif vibrant selon l'invention montrant l'agencement des moyens de protection contre les chocs mécaniques,
- la figure 3 représente une vue partielle tridimensionnelle d'une partie d'un objet portable qui comprend le dispositif vibrant muni des moyens de protection contre des chocs mécaniques selon l'invention,
- la figure 4a représente une vue en coupe selon le plan A-A de la figure 3 de l'objet portable comprenant le dispositif vibrant selon l'invention, et
- la figure 4b représente une vue en coupe selon la ligne B-B de la figure 4a de l'objet portable comprenant le dispositif vibrant selon l'invention.

Dans la description suivante d'un mode préféré de réalisation d'un dispositif vibrant, tous les éléments qui le composent qui sont bien connus d'un homme du métier dans ce domaine technique, seront expliqués de manière simplifiée. De préférence, le dispositif vibrant et un circuit d'entraînement du dispositif sont destinés à équiper un objet portable de petite taille, tel qu'une montre-bracelet de manière à fournir une alarme silencieuse par vibration d'une masse mobile du dispositif vibrant.

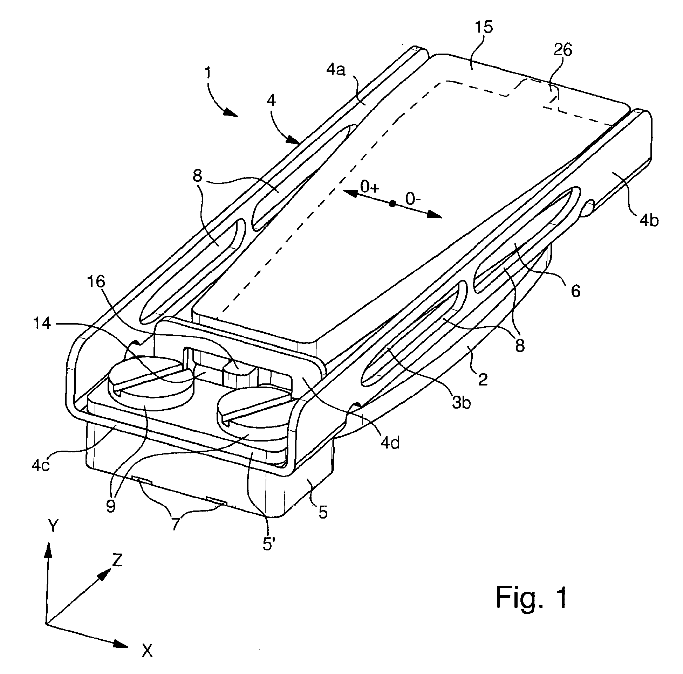

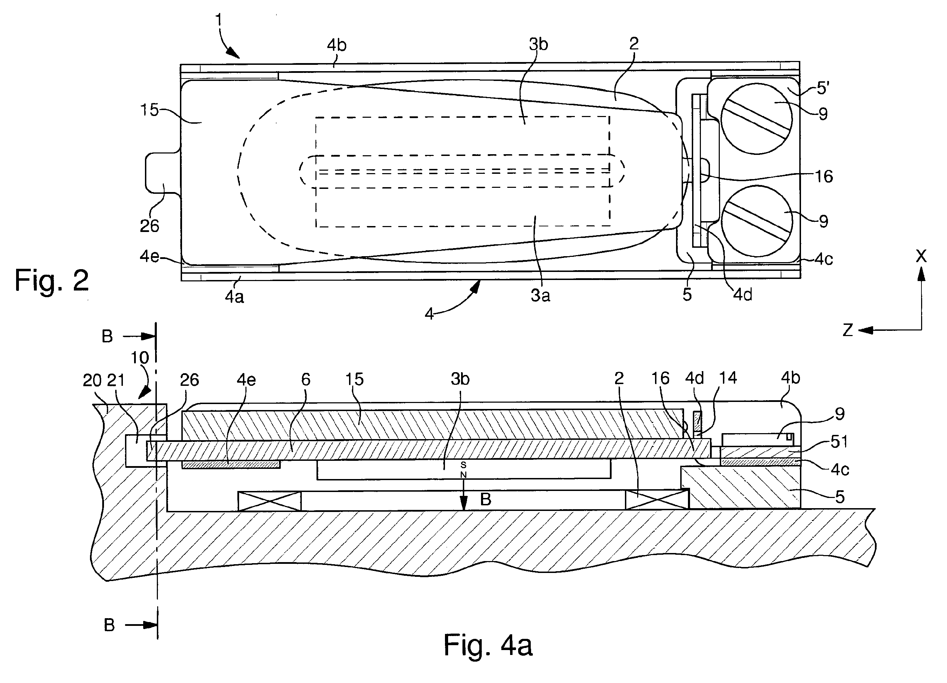

Les figures 1 et 2 représentent un mode de réalisation préféré du dispositif vibrant 1 destiné à être monté dans un boîtier d'un objet portable, tel qu'une montre-bracelet. Ce dispositif vibrant 1 est défini comme un dispositif vibrant demi Voice Coil. II est utilisé de préférence pour générer une alarme silencieuse ou pour signaler des appels téléphoniques par vibration.

Le dispositif vibrant 1 comprend une bobine plate annulaire 2, qui est fixée en bordure à une structure fixe amagnétique 5. La bobine 2 peut comprendre une ou plusieurs spires jointives sensiblement coaxiales. Deux bornes de connexion électrique 7 de la bobine 2 sont représentées en figure 1 sur une partie inférieure de la structure amagnétique 5. Une fois que le dispositif vibrant est fixé sur une plate-forme à circuit imprimé de l'objet portable, les bornes de connexion peuvent être soudées sur des plages métalliques correspondantes afin de pouvoir être reliées à un circuit électronique d'entraînement du dispositif vibrant 1 non représenté.

Le dispositif vibrant 1 comprend encore une masse mobile 3a, 3b, 6 et 15 composée en partie d'une structure magnétique. Cette masse mobile est reliée à la structure amagnétique 5 sans contact mécanique avec la bobine à l'aide d'un élément ressort 4, qui comprend une pièce plate 4d expliquée ci-après pour servir de moyens de guidage de la masse mobile afin de protéger le dispositif de tout choc mécanique.

La structure magnétique de la masse mobile comprend une plaque ferromagnétique 6 sur laquelle sont fixés deux aimants permanents 3a et 3b adjacents de direction de magnétisation opposée en regard respectivement de deux portions diamétralement opposées de la bobine. Les aimants génèrent un champ magnétique B, qui est conduit dans la plaque ferromagnétique 6, dans une direction selon l'axe Y perpendiculaire au plan de la bobine.

Lorsque la bobine 2 est alimentée par des signaux électriques alternatifs, qui sont par exemple des impulsions rectangulaires successives de tension, le courant passant dans les portions de bobine est sensiblement perpendiculaire au champ magnétique B dans la direction de l'axe Z. De ce fait, une force de Laplace dans une direction selon l'axe X est obtenue afin de faire osciller la masse mobile dans un plan sensiblement perpendiculaire à l'axe de la bobine 2 dans une direction d'oscillation déterminée. Le mouvement de la masse mobile est sensiblement sinusoïdal dans les sens opposés représentés par O+ et O- par rapport à une position centrale de repos de la masse mobile. La fréquence de résonance de la masse mobile peut être de l'ordre de 135 Hz par exemple.

Pour obtenir une masse plus importante, il peut être prévu de placer une plaque de masse complémentaire 15 sur la plaque ferromagnétique 6. Cette plaque complémentaire 15 peut être réalisée dans un matériau tel qu'en laiton ou tungstène.

L'élément ressort 4, qui maintient la masse mobile, comprend une lame de base 4c fixée par deux vis 9 par l'intermédiaire d'une plaque amagnétique 5' sur la structure fixe amagnétique 5, et deux lames ressorts 4a et 4b venant de matière avec la lame de base et disposées sur deux côtés opposés de la lame de base. Les lames ressorts 4a et 4b sont disposées perpendiculaires par rapport à la lame de base 4c, de manière que la section transversale forme un U. Une lame d'extrémité 4e relie les extrémités des lames ressorts 4a et 4b opposées à la lame de base. Cette lame d'extrémité, sur laquelle est fixée par soudage laser ou par collage par exemple une portion de la plaque ferromagnétique 6, est dans un plan sensiblement parallèle à la lame de base.

La plaque ferromagnétique 6 et la plaque complémentaire 15 sont placées entre les lames ressorts 4a et 4b sans contact direct avec chaque lame ressort. De préférence, la hauteur des plaques ferromagnétique 6 et complémentaire 15 est inférieure à la hauteur des lames ressorts 4a et 4b. Chaque lame ressort peut comprendre deux fentes traversantes longitudinales 8, qui sont dimensionnées pour ajuster une fréquence de résonance théorique du dispositif vibrant.

Pour équiper une montre-bracelet par exemple, les dimensions du dispositif vibrant représenté aux figures 1 et 2 peuvent être de 10 mm de long, 4 mm de large et 2 mm de hauteur avec une bobine qui peut comprendre jusqu'à 400 spires jointives sensiblement coaxiales.

On comprend donc que du fait de la petite taille souhaitée du dispositif vibrant 1, il est nécessaire de préserver l'élément ressort 4 maintenant la masse mobile relativement importante de toute contrainte mécanique provoquée par un choc mécanique. Pour ce faire, l'élément ressort 4 comprend une pièce plate 4d qui vient de matière avec la lame de base 4c et est disposée sensiblement perpendiculaire à la lame de base en regard de la masse mobile et parallèle à la direction d'oscillation de la masse mobile.

La pièce plate 4d comprend une ouverture longitudinale de forme sensiblement rectangulaire 14 dans la direction d'oscillation en combinaison avec une surface de la structure fixe 5 sur laquelle est fixée la lame de base 4c. La plaque ferromagnétique 6 de la masse mobile comprend un élément en saillie 16 qui pénètre à travers l'ouverture longitudinale de manière qu'une partie de l'élément en saillie est disposée dans l'ouverture 14 avec un certain jeu. Cette ouverture longitudinale définit des moyens de guidage de la masse mobile. Les bords de l'ouverture définissent par contre des butées mécaniques pour limiter l'amplitude de mouvement de la masse mobile de manière déterminée au moins dans les directions selon les axes X et Y.

La largeur de l'ouverture 14 est de dimension légèrement supérieure à l'épaisseur de la partie de l'élément en saillie dans l'ouverture, mais inférieure au double de l'épaisseur de cette partie dudit élément en saillie. Bien entendu, l'élément en saillie peut ne pas être d'épaisseur uniforme dans la direction de l'axe Z. Il pourrait prendre la forme d'un crochet avec une épaisseur des parties de l'élément en saillie en dehors de l'ouverture plus grande que la largeur de l'ouverture pour assurer une meilleure protection contre les chocs également dans la direction de l'axe Z.

Au lieu de pratiquer une ouverture dans la pièce 4d, il aurait pu être envisagé de configurer la pièce en forme de L de manière à définir un logement avec la surface de la structure fixe 5 sur laquelle est fixée la lame de base 4c. Toutefois, cette forme d'exécution nécessite de réaliser deux pliages de la pièce 4d et de former des butées aux extrémités de la pièce dans la direction longitudinale pour limiter l'amplitude de mouvement de la masse mobile dans la direction d'oscillation selon l'axe X.

Comme la partie fixe du dispositif vibrant comprend les moyens de protection contre des chocs mécaniques par l'intermédiaire de la pièce 4d qui fait partie de l'élément ressort 4, aucun élément supplémentaire n'est donc nécessaire pour assurer la protection du dispositif vibrant. De ce fait, le dispositif vibrant est facile à réaliser tout en étant protégé de tout choc mécanique.

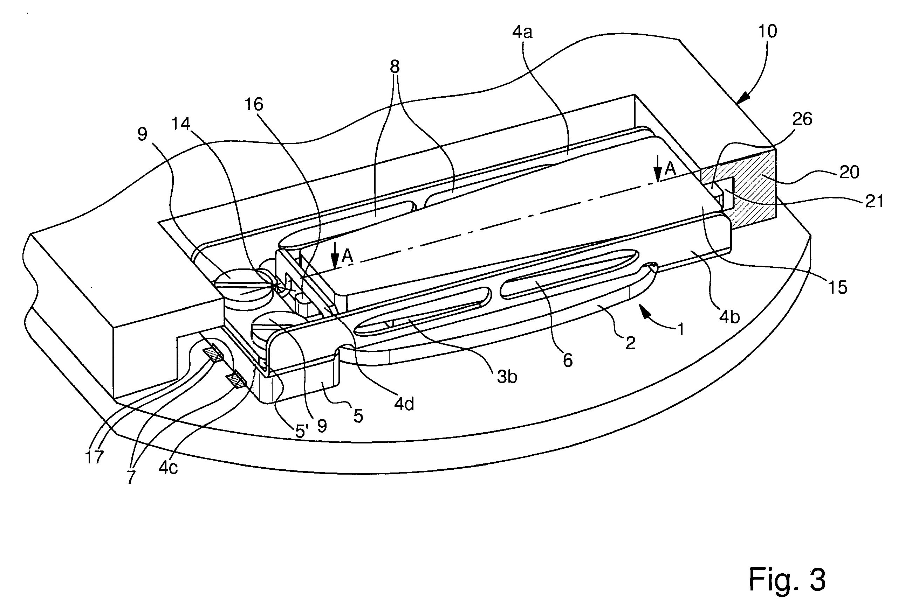

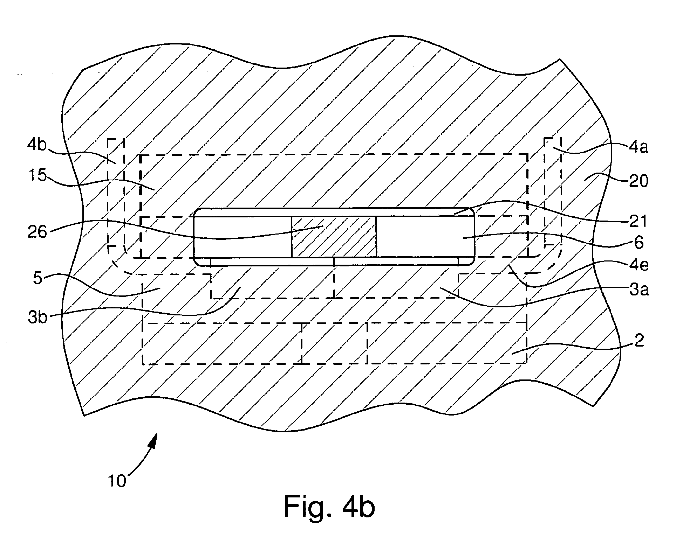

De manière à assurer une meilleure protection contre les chocs mécaniques dans toutes les directions, le dispositif vibrant 1 comprend encore un second élément en saillie 26 destiné à coopérer avec un logement d'une paroi d'une plate-forme expliqué ci-dessous en référence aux figures 3, 4a et 4b. Ce second élément en saillie 26 est placé sur un côté de la masse mobile opposé au premier élément en saillie 16. Ce second élément en saillie vient de matière avec la plaque ferromagnétique tout comme le premier élément en saillie. De préférence, les deux éléments en saillie sont disposés sur une ligne centrale de la masse mobile perpendiculaire à la direction d'oscillation de ladite masse.

Il est à noter que les éléments en saillie 16 et 26 peuvent venir de matière avec la plaque ferromagnétique 6 comme décrit ci-dessus. Toutefois, ils peuvent être prévus sur la plaque complémentaire 15 plutôt que sur la plaque ferromagnétique 6. Ces éléments en saillie peuvent aussi être fixés à l'une ou l'autre plaque ou à l'intersection des deux plaques par tout moyen. Ils peuvent être vissés, soudés ou collés sur la ou les plaques.

Aux figures 3, 4a et 4b, il est représenté le dispositif vibrant 1 monté sur une plate-forme 10 d'un objet portable, qui est de préférence une montre-bracelet. De manière à ne pas surcharger les figures, il n'est représenté que la plate-forme 10 qui est logé dans un boîtier non représenté de la montre-bracelet. Cette plate-forme peut être une platine de montre. Un circuit imprimé, non représenté, peut être réalisé sur une partie de cette plate-forme 10 pour la connexion électrique des différents composants électriques de la montre.

Comme on peut le voir sur la figure 3, le dispositif vibrant est fixé sur la plate-forme 10 de manière que les bornes de connexion 7 de la bobine viennent contacter des pistes métalliques 17 de la plate-forme 10. Ces pistes métalliques 17 sont reliées notamment à un circuit d'entraînement du dispositif vibrant qui n'est pas représenté.

Lors de la fixation du dispositif vibrant 1 sur la plate-forme 10, l'élément en saillie 26 est positionné dans un logement de guidage 21 pratiqué dans une paroi rigide 20 entourant en partie le dispositif vibrant 1. Quand la masse mobile est en position de repos, l'élément en saillie 26 est positionné au centre de ce logement de guidage 21.

Le logement 21 a une section, comme montré en figure 4b, de forme sensiblement rectangulaire avec une largeur légèrement supérieure à l'épaisseur de l'élément en saillie 26, mais inférieure au double de l'épaisseur de cet élément en saillie. La longueur du logement 21 dans la direction d'oscillation selon l'axe X est dimensionnée de manière à permettre à la masse mobile d'osciller librement dans la direction d'oscillation au moins jusqu'à une valeur d'amplitude maximale déterminée. Les bords de ce logement servent de butées à l'élément en saillie 26 pour limiter l'amplitude de mouvement dans toutes les directions.

Grâce à la combinaison de ce logement de guidage 21 de la paroi 20 ayant une profondeur déterminée, et à la pièce plate 4d munie de l'ouverture de guidage de l'élément en saillie 16, une bonne protection contre les chocs mécaniques dans toutes les directions du dispositif vibrant est assurée.

II n'est pas nécessaire d'entourer le dispositif vibrant de ladite paroi. De ce fait au lieu de prévoir un logement de guidage dans ladite paroi, il peut être prévu de monter sur la plate-forme une plaque ayant une ouverture longitudinale ou une pièce en forme de U pour recevoir le second élément en saillie du dispositif vibrant.

Il est à noter que même si les moyens de protection ont été décrits ci-devant pour un dispositif vibrant du type demi Voice Coil, ces moyens de protection peuvent également être appliqués à tout autre dispositif vibrant fonctionnant selon un principe équivalent, tel que celui décrit dans le document EP 0 625 738 par exemple.

A partir de la description qui vient d'être faite de multiples variantes de réalisation du dispositif vibrant peuvent être conçues par l'homme du métier sans sortir du cadre de l'invention définie par les revendications. II peut être prévu plusieurs éléments en saillie de chaque côté de la masse mobile pour coopérer avec l'ouverture de la pièce ou avec le logement de la paroi de la plate-forme de l'objet portable. Il peut être prévu également que la structure fixe ou la pièce de l'élément ressort comprend une protubérance guidée dans une rainure longitudinale pratiquée dans une partie de la masse mobile en regard de la structure afin d'assurer la protection contre les chocs mécaniques du dispositif vibrant. Il peut être prévu qu'une partie fixe supplémentaire du dispositif vibrant soit disposée sur un côté opposé à la lame de base fixe de l'élément ressort. Cette partie fixe supplémentaire comprend un logement de guidage pour le second élément en saillie du dispositif vibrant pour assurer une protection du dispositif vibrant par les éléments en saillie placés sur deux côtés opposés de la masse mobile coopérant avec les moyens de guidage.

## Revendications

1. Dispositif vibrant (1) pour un objet portable, tel qu'une montre-bracelet, le dispositif comprenant une masse mobile (3a, 3b, 6, 15) constituée en partie d'une structure magnétique reliée à une structure fixe (5) par l'intermédiaire d'un élément ressort (4), et une bobine (2) reliée à la structure fixe sans contact mécanique avec la masse mobile et couplée électro-magnétiquement à la masse mobile pour permettre de la faire osciller dans au moins une direction d'oscillation (X) lorsqu'elle est alimentée par des signaux électriques alternatifs à fréquence déterminée, **caractérisé en ce que** l'élément ressort (4) comprend une lame de base (4c) fixée sur la structure fixe (5), et deux lames ressorts (4a, 4b) venant de matière avec la lame de base et disposées sensiblement perpendiculaires à la lame de base sur deux côtés opposés de ladite lame de base, la masse mobile étant maintenue entre les deux lames ressorts, et **en ce qu'**une partie fixe du dispositif vibrant comprend une pièce (4d) venant de matière avec la lame de base cette pièce (4d) étant disposée sur un côté de la lame de base parallèle à la direction d'oscillation de la masse mobile, la partie fixe étant agencée pour coopérer avec un élément en saillie (16) de la masse mobile pour permettre à la masse mobile d'osciller librement dans un mode de fonctionnement normal du dispositif vibrant au moins jusqu'à une valeur d'amplitude maximale déterminée, et pour limiter l'amplitude de mouvement de la masse mobile de manière déterminée dans toutes les directions afin de protéger le dispositif vibrant de chocs mécaniques.

2. Dispositif vibrant (1) selon la revendication 1, **caractérisé en ce que** l'élément en saillie (16) du côté de la lame de base, est positionné dans des moyens de guidage (14) définis par ladite pièce, (4d) ou par une combinaison de la pièce et de la structure fixe (5) pour permettre à la masse mobile d'osciller librement en fonctionnement normal dans une direction d'oscillation déterminée et pour limiter l'amplitude de mouvement de la masse mobile de manière déterminée dans chaque direction par rapport à une position centrale de l'élément en saillie de la masse mobile au repos.

3. Dispositif vibrant (1) selon la revendication 2. **caractérisé en ce que** la pièce plate (4d) est disposée perpendiculairement par rapport à la lame de base, **en ce que** la pièce comprend une ouverture longitudinale (14) dans la direction d'oscillation en combinaison avec une surface de la structure fixe sur laquelle est fixée la lame de base pour définir les moyens de guidage, l'élément en saillie (16) de la masse mobile étant disposé en partie à travers l'ouverture longitudinale, et **en ce que** la largeur de l'ouverture (14) est de dimension supérieure à l'épaisseur de la partie de l'élément en saillie traversant l'ouverture, et inférieure au double de l'épaisseur de la partie dudit élément en saillie.

4. Dispositif vibrant (1) selon l'une des revendications 2 et 3. le dispositif comprenant une bobine plate annulaire (2), qui est constituée d'un enroulement d'une ou plusieurs spires sensiblement coaxiales et fixée à la structure fixe amagnétique, et une masse mobile, qui comprend au moins un aimant permanent (3a, 3b) positionné en regard d'une portion de bobine, une plaque ferromagnétique (6) sur laquelle est fixée l'aimant permanent, et une plaque complémentaire (15) fixée sur la plaque ferromagnétique (6), la masse mobile étant destinée à osciller dans un plan perpendiculaire à un axe de la bobine, **caractérisé en ce que** l'élément ressort comprend une lame d'extrémité (4e) reliant les extrémités des lames ressorts (4a, 4b) opposées à la lame de base, la lame d'extrémité étant parallèle à la lame de base (4c), et **en ce que** la plaque ferromagnétique (6) de la masse mobile est fixée sur la lame d'extrémité.

5. Dispositif vibrant (1) selon la revendication 4, **caractérisé en ce que** la plaque ferromagnétique (6) comprend l'élément en saillie (16) positionné dans les moyens de guidage du dispositif vibrant.

6. Dispositif vibrant (1) selon l'une des revendications 2 à 5, **caractérisé en ce que** la masse mobile comprend un second élément en saillie (26) disposé sur un côté de la masse mobile opposé au premier élément en saillie (16), et **en ce que** le second élément en saillie est destiné à être positionné dans un logement de guidage (21) de dimension adaptée, qui est pratiqué dans une paroi (20) d'une plate-forme intérieure (10) d'un objet portable quand le dispositif vibrant est fixé sur la plate-forme.

7. Dispositif vibrant (1) selon la revendication 6, **caractérisé en ce que** les premier et second éléments en saillie (16, 26) de la masse mobile sont disposés sur une ligne sensiblement perpendiculaire à la direction d'oscillation de la masse mobile.

8. Objet portable, tel qu'une montre-bracelet comprenant un dispositif vibrant selon l'une des revendications précédentes, le dispositif vibrant étant fixé sur une plate-forme (10) de l'objet portable, **caractérisé en ce que** la plate-forme comprend une paroi (20) avec un logement de guidage (21) dans lequel est positionné un élément en saillie (26) de la masse mobile du dispositif vibrant (1), qui est disposé sur un côté de la masse mobile opposé à la structure fixe (5), le logement de guidage étant de dimension adaptée de manière à permettre à la masse mobile d'osciller librement dans un mode de fonctionnement normal du dispositif vibrant au moins jusqu'à une valeur d'amplitude maximale déterminée, et pour limiter l'amplitude de mouvement de la masse mobile de manière déterminée dans toutes les directions afin de protéger le dispositif vibrant de chocs mécaniques.

## Patentansprüche

1. Vibrationseinrichtung (1) für ein portables Objekt, wie z.B. für eine Armbanduhr, die Einrichtung weist eine bewegliche Masse (3a, 3b, 6, 15) auf, die zum Teil aus einer magnetischen Struktur gebildet ist, die über ein Federelement (4) an einer fixen Struktur (5) angebunden ist und eine Spule (2) aufweist, die ohne mechanischen Kontakt mit der beweglichen Masse an die fixe Struktur angebunden und elektromagnetisch mit der beweglichen Masse gekoppelt ist, um diese in zumindest einer Oszillationsrichtung (X) schwingen zu lassen, wenn sie mit alternierenden elektrischen Signalen einer bestimmten Frequenz beaufschlagt wird, **dadurch gekennzeichnet, dass** das Federelement (4) eine Basisklinge (4c) aufweist, die an der fixen Struktur (5) fixiert ist und zwei Federklingen (4a, 4b) aufweist, die einstückig mit der Basisklinge ausgebildet und im Wesentlichen senkrecht zur Basisklinge an zwei gegenüberliegenden Seiten der Basisklinge angeordnet sind, wobei die bewegliche Masse zwischen den zwei Federklingen gehalten wird und dadurch, dass ein fixer Abschnitt der Vibrationseinrichtung ein einstückig mit der Basisklinge ausgebildetes Stück (4d) aufweist, welches Stück (4d) an einer Seite der Basisklinge parallel zur Oszillationsrichtung der mobilen Masse angeordent ist, der fixe Abschnitt dazu ausgebildet ist, mit einem von der beweglichen Masse überstehenden Element (16) zusammenzuwirken, um es der beweglichen Masse zu erlauben, in einem normalen Funktionsmodus der Vibrationseinrichtung zumindest bis zur einem bestimmten maximalen Amplitudenwert frei zu schwingen und um die Amplitude der Bewegung der beweglichen Masse in einer bestimmten Art und Weise in sämtlichen Richtungen einzuschränken, um die Vibrationseinrichtung gegen mechanische Stöße zu schützen.

2. Vibrationseinrichtung (1) nach Anspruch 1, **dadurch gekennzeichnet, dass** das von der Basisklinge überstehende Element (16) in Führungsmitteln (14) positioniert ist, die über das Stück (4d) oder über eine Kombination des Stücks und der fixen Struktur (5) definiert sind, um es der beweglichen Masse zu erlauben, in einer normalen Funktion in einer bestimmten Oszillationsrichtung frei zu schwingen und um die Amplitude der Bewegung der beweglichen Masse in einer bestimmten Weise in jeder Richtung gegenüber einer zentralen Ruhe-Position des von der mobilen Masse überstehenden Elements einzuschränken.

3. Vibrationseinrichtung (1) nach Anspruch 2, **dadurch gekennzeichnet, dass** das flache Stück (4d) senkrecht gegenüber der Basisklinge angeordnet ist, so dass das Stück eine longitudinale Öffnung (14) in Schwingungsrichtung in Kombination mit einer Oberfläche der fixen Struktur aufweist, auf welcher die Basisklinge zur Bildung der Führungsmittel fixiert ist, wobei das von der beweglichen Masse überstehende Element (16) zum Teil über der longitudinalen Öffnung angeordnet ist und wobei die Größe der Öffnung (14) größer als die Dicke des Abschnitts des sich über die Öffnung erstreckenden überstehenden Elements ist und kleiner als das doppelte der Dicke des Abschnitts des überstehenden Elements ist.

4. Vibrationseinrichtung (1) nach einem der Ansprüche 2 und 3, wobei die Einrichtung eine flache ringförmige Spule (2) aufweist, die durch Wickeln einer oder mehrerer im Wesentlichen koaxialer Windungen gebildet ist, die an der nicht magnetischen fixen Struktur fixiert sind, und eine bewegliche Masse aufweist, die zumindest einen Permanentmagneten (3a, 3b) aufweist, der gegenüber einem Abschnitt der Spule angeordnet ist und von einem ferromagnetischen Schild (6) gebildet ist, auf welcher der Permanentmagnet fixiert ist und von einem komplementären Schild (15) gebildet ist, welches auf dem ferromagnetischen Schild (6) fixiert ist, wobei die bewegliche Masse dazu bestimmt ist, in einer parallel zur Achse der Spule liegenden Ebene zu schwingen, **dadurch gekennzeichnet, dass** das Federelement eine Endklinge (4e) aufweist, die an den Enden der Federklingen (4a, 4b) gegenüber der Basisklinge angebunden ist, wobei die Endklinge parallel zur Basisklinge (4c) ist, und wobei das ferromagnetische Schild (6) der beweglichen Masse auf der Endklinge fixiert ist.

5. Vibrationseinrichtung (1) nach Anspruch 4, **dadurch gekennzeichnet, dass** das ferromagnetische Schild (6) das überstehende Element (16) aufweist, welches in den Führungsmitteln der Vibrationseinrichtung positioniert ist.

6. Vibrationseinrichtung (1) nach einem der Ansprüche 2 bis 5, **dadurch gekennzeichnet, dass** die bewegliche Masse ein zweites überstehendes Element (26) aufweist, welches auf einer Seite der beweglichen Masse gegenüber dem ersten überstehenden Element (16) angeordnet ist und wobei das zweite überstehende Element dazu vorgesehen ist, in einer Führungsaufnahme (21) angepasster Dimensionierung angeordnet zu werden, die in einer Wand (20) einer inneren Plattform (10) eines portablen Objekts ausgebildet ist, wenn die Vibrationsanordnung auf der Plattform fixiert ist.

7. Vibrationseinrichtung (1) nach Anspruch 6, **dadurch gekennzeichnet, dass** die ersten und zweiten überstehenden Elemente (16, 26) der beweglichen Masse im Wesentlichen auf einer Linie senkrecht zur Schwingungsrichtung der beweglichen Masse angeordnet sind.

8. Portables Objekt, wie z.B. eine Armbanduhr, welche eine Schwingungseinrichtung nach einem der vorhergehenden Ansprüche aufweist, wobei die Vibrationseinrichtung auf einer Plattform (10) des portablen Objekts fixiert ist, **dadurch gekennzeichnet, dass** die Plattform eine Wand (20) mit einer Führungsaufnahme (21) aufweist, in welcher ein überstehendes Element (26) der beweglichen Masse der Vibrationseinrichtung (1) positioniert ist, welches an einer Seite der beweglichen Masse gegenüber der fixen Struktur (5) angeordnet ist, wobei die Führungsaufnahme derart angepasst dimensioniert ist, um es der beweglichen Masse zu erlauben, in einem normalen Funktionsmodus der Vibrationseinrichtung zumindest bis zu einem bestimmten maximalen Amplitudenwert frei zu schwingen und um die Amplitude der Bewegung der beweglichen Masse derart in sämtlichen Richtung zu begrenzen, um die Vibrationseinrichtung gegen mechanische Stöße zu schützen.

## Claims

1. Vibrating device (1) for a portable object, such as a wristwatch, the device including a moving mass (3a, 3b, 6, 15) formed in part of a magnetic structure connected to a fixed structure (5) via a spring element (4), and a coil (2) connected to the fixed structure without any mechanical contact with the moving mass and electromagnetically coupled to the moving mass to enable said mass to oscillate in at least one direction of oscillation (X) when it is powered by alternating electrical signals at a determined frequency, **characterised in that** the spring element (4) includes a base strip (4c) secured to the fixed structure (5), and two strip springs (4a, 4b) integral with the base strip and arranged substantially perpendicularly to the base strip on two opposite sides of said base strip, the moving mass being held between the two strip springs, and **in that** a fixed part of the vibrating device includes a part (4d) integral with the base strip, this part (4d) being arranged on one side of the base strip parallel to the direction of oscillation of the moving mass, the fixed part being arranged so as to cooperate with a projecting element (16) of the moving mass to enable the moving mass to oscillate freely in a normal operating mode of the vibrating device at least to a determined maximum amplitude value, and to limit the movement amplitude of the moving mass in a determined manner in all directions in order to protect the vibrating device from mechanical shocks.

2. Vibrating device (1) according to claim 1, **characterised in that** the projecting element (16) on the side of the base strip is positioned in guide means (14) defined by said part (4d) or by a combination of the part and the fixed structure (5) to enable the moving mass to oscillate freely during normal operation in a determined direction of oscillation and to limit the movement amplitude of the moving mass in a determined manner in each direction with respect to a central position of the projecting element of the moving mass at rest.

3. Vibrating device (1) according to claim 2, **characterised in that** the flat part (4d) is arranged perpendicularly with respect to the base strip, **in that** the part includes a longitudinal aperture (14) in the direction of oscillation in combination with a surface of the fixed structure to which the base strip is secured to define the guide means, the projecting element (16) of the moving mass being arranged in part through the longitudinal aperture, and **in that** the width of the aperture (14) is of larger dimensions than the thickness of the part of the projecting element passing through the aperture, and less than twice the thickness of the part of said projecting element.

4. Vibrating device (1) according to any of claims 2 and 3, the device including a flat annular coil (2), which is formed of one winding with one or several substantially coaxial turns and secured to the fixed non-magnetic structure, and a moving mass, which includes at least one permanent magnet (3a, 3b) positioned facing a portion of coil, a ferromagnetic plate (6) to which the permanent magnet is fixed and a complementary plate (15) secured to the ferromagnetic plate (6), the moving mass being intended to oscillate in a plane perpendicular to an axis of the coil, **characterised in that** the spring element includes an end strip (4e) connecting the ends of the strip springs (4a, 4b) opposite the base strip, the end strip being parallel to the base strip (4c) and **in that** the ferromagnetic plate (6) of the moving mass is secured to the end strip.

5. Vibrating device (1) according to according to claim 4, **characterised in that** the ferromagnetic plate (6) includes the projecting element (16) positioned in the guide means of the vibrating device.

6. Vibrating device (1) according to any of claims 2 to 5, **characterised in that** the moving mass includes a second projecting element (26) arranged on one side of the moving mass opposite the first projecting element (16), and **in that** the second projecting element is to be positioned in a guide housing (21) of suitable dimensions, which is made in one wall (20) of an inner platform (10) of a portable object when the vibrating device is secured to the platform

7. Vibrating device (1) according to claim 6, **characterised in that** the first and second projecting elements (16, 26) of the moving mass are arranged on a line substantially perpendicular to the direction of oscillation of the moving mass.

8. Portable object, such as a wristwatch, including a vibrating device according to any of the preceding claims, the vibrating device being secured to a platform (10) of the portable object, **characterised in that** the platform includes a wall (20) with a guide housing (21) in which a projecting element (26) of the moving mass of the vibrating device (1) is positioned, said projecting element being arranged on one side of the moving mass opposite the fixed structure (5), the guide housing being of suitable dimensions so as to enable the moving mass to oscillate freely in normal operating mode of the vibrating device at least up to a determined maximum amplitude value, and to limit the movement amplitude of the moving mass in a determined manner in all directions in order to protect the vibrating device from mechanical shocks.
